(19) Europäisches Patentamt
European Patent Office
Office européen des brevets

(11) Publication number: 0 239 877 B1

# (12) EUROPEAN PATENT SPECIFICATION

(45) Date of publication of the patent specification: 18.07.90

(51) Int. Cl.[5]: B29C 67/22, B32B 5/20, B29C 51/00

(21) Application number: 87103935.0

(22) Date of filing: 18.03.87

## (54) Method for producing composite structures with a polyurethane interior, and the composite structure obtained.

(30) Priority: 01.04.86 IT 1994586

(43) Date of publication of application: 07.10.87 Bulletin 87/41

(45) Publication of the grant of the patent: 18.07.90 Bulletin 90/29

(84) Designated Contracting States: AT BE CH DE ES FR GB GR LI LU NL SE

(56) References cited:
FR-A- 2 231 702
US-A- 3 379 800
US-A- 4 177 099
US-A- 4 282 285

POLYURETHANES, vol. 16, 1978, pages 2-3,32-45,150-155,228-231,348-351, part I, Robert E. Krieger Publishing Co., Huntington, New York, US; J.H. SAUNDERS et al.: "Chemistry and technology"
P.F. BRUINS: "Polyurethane Technology", 1969, pages 2-5,14-15, Interscience Publishers, John Wiley & Sons, New York, US

(73) Proprietor: ERREBI S.r.L., Via Pietro Mascagni, 7, I-20122 Milan(IT)

(72) Inventor: Besozzi, Carlo, Via Monsignor Paleari, 87, I-20010 Pogliano, Milan(IT)
Inventor: Pozzi, Angelo, Via Grazioli, 1, I-22060 Arosio Como(IT)

(74) Representative: Giambrocono, Alfonso, Dr. Ing. et al, Ing. A. Giambrocono & C. S.r.l. Via Rosolino Pilo 19/B, I-20129 Milano(IT)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method for producing composite structures comprising at least two layers of synthetic materials, one of which is polyurethane.

The invention also relates to the composite structures obtained by the method, for example panels or sheets, toilet seats and covers, paper holders, pen holders, furniture, furniture parts and other articles of industrial and domestic use.

USA Patent 3,379,800 describes a method for producing toilet seats and covers comprising a layer (outer) of synthetic material and a layer (inner) of elastic expanded polyurethane. Polymethylmethacrylate is among the various materials proposed for the outer layer. The method consists of vacuum-forming a given shape from a polymethylmethacrylate sheet as so to form a cavity, feeding into this cavity a given quantity of expandable polyurethane mixture, covering this cavity with a polymethylmethacrylate sheet so as to close it and form a chamber, and then expanding the polyurethane mixture to fill this chamber.

The experience of the applicants has shown that in the product obtained by this known method, the outer polymethylmethacrylate layer tends to separate from the polyurethane layer. This obviously represents a serious drawback.

The applicants have surprisingly discovered that this separation tendency can be obviated by using a modified polymethylmethacrylate and a different type of polyurethane, and by operating within certain temperature ranges and applying vacuum.

According to the invention, the modified polymethylmethacrylate used is of the impact resistant type, described for example in italian patent 1045246 to which reference should be made for further details, and the different type of polyurethane is that defined as rigid compact or semiexpanded and therefore non-elastic, and the reaction of the polyurethane mixture for forming the rigid polyurethane layer in contact with the impact resistant polymethylmethacrylate layer is implemented under the action of heat while applying a vacuum to the impact resistant polymethylmethacrylate layer.

The rigid compact or semiexpanded polyurethane is produced from a mixture, the reactive components of which comprises:

a) a mixture of polyols having several hydroxyl groups per molecule and a mean molecular weight of about 1300, deriving from the reaction between alcohols such as sorbitol, saccharose or glycerin, with alkylene oxides of ethylene or propylene type,

b) an isocyanate, namely diphenylmethane-4-4'-diisocyanate, deriving from the reaction between aniline, formaldehyde and phosgene, and which can be represented by the formula

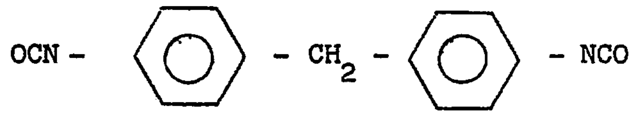

(MDI)

However, in practice as this reaction proceeds to form other polymers, the product is a mixture of MDI and other polymers, characterized by:
- amine equivalent = 135-140
- specific gravity 25°/25°C = 1.23
- hydrolysable chloride = 0,35% max.

and is able to react with compounds containing active hydrogen atoms, as are all compounds containing the highly unsaturated group -N=C=O.

The reaction between the two (polyol and MDI) can be represented schematically as follows:

$$R_1 - N = C = O + R_2 - O - H \longrightarrow R_1 - \overset{H}{\overset{|}{N}} - \overset{O}{\overset{\|}{C}} - O - R_2$$

ie when a polyfunctional isocyanate reacts with a polyfunctional alcohol (polyol), a complex structure polymer is obtained.

Expanding agents (water, halogenated hydrocarbons such as Freon (monofluoro-trichloroethane)), fillers can be added tot he reactive polyurethane components, such as hollow glass microspheres of apparent density 180 g/1-680 g/l, carbonates, ammonium silicates, sulphates, reinforcement fibres or other substances well known in the polyurethane filler field. The usable quantities range from 5 to 60 parts by weight per 100 parts of polyol.

In order to trigger the reaction, catalysts such as stannous compounds (stannous octoate), tertiary amines or their mixtures can be added to one of the components, preferably the polyol, in a quantity of 1-2 parts by weight per 100 parts of mixture.

The reactive mixture can be formed with polyol/isocyanate weight ratios of between 1:0.95 and 1:1.05.
Aliphatic solvent can be present in the polyol component for viscosity adjustment.
The outer impact resistant polymethylmethacrylate layer has a thickness less than 1.2 mm and can cover the inner rigid compact polyurethane layer either completely or partially. The outer impact resistant polymetylmethacrylate layer can be formed from either flat sheets or from shaped element obtained from flat sheets by vacuum-forming in accordance with conventional method.
The invention will be more apparent from the detailed description given hereinafter by way of non-limiting example, with reference to the accompanying drawing, in which:

Figure 1 is a diagrammatic section through a device for implementing the method, the device being designed to produce a flat panel of rectangular contour;
Figure 2 is diagrammatic section through a device for producing a different object by the method of the invention;
Figure 3 shows the device of Figure 1 in a different operating stage;
Figure 4 is a perspective view of a toilet seat with its cover;
Figure 5 is a section on the line V-V of Figure 4;
Figure 6 is a diagrammatic partly full and partly sectional view of an apparatus for welding and trimming the edges to obtain a hollow structure.

In Figure 1, which diagrammatically illustrates a device for producing a flat panel and by which the invention can be implemented, the reference numeral 1 indicates a mould. In it there is a forming cavity 2, the shape of which corresponds to that of the flat rectangular panel to be obtained, this being in the form of a composite sandwich comprising two flat impact resistant polymethylmethacrylate sheets 3, 4 of thickness not exceeding 1.2 mm, with a layer of rigid compact or semiexpanded polyurethane 5 interposed.
The mould 1 is provided internally with ducts 6 connected to an external discharge 7 and connectable by means of an external valve 8 either to a source 9 of a hot water at a thermostatically controlled temperature or to a source 10 of water at mains temperature.
With the arrangement, the mould 1 can be heated or cooled.
Other conventional means can be used for producing these heating and cooling effects.
In the base wall of the mould-forming cavity 2 there are a plurality of holes, each of which represents the end of a duct 11. All these ducts, which are provided within the mould interior, terminate in a manifold 12 connected to a vacuum source 13 by a valve 14.
The mould is completed by a cover 15, which is connected to the rod 16 of a double-acting cylinder-piston unit 17 so that it can be moved towards and away from the mould, as indicated by the arrows A. The cover is also provided with vacuum ducts 18. These are connected to a vacuum source 19 by way of a valve 20 and a manifold 21.
The cover 15, which is also provided with water circulation for its thermostatically controlled heating in an analogous manner to the mould 1, comprises on its lower face a continuous side wall 22 defining a seat which is to hold the impact resistant polymethylmethacrylate sheet 3.
When the cover 15 is moved up to the mould, this side wall mates with a peripherical recess 23 in the mould to form a seal.
With the cover 15 withdrawn, the impact resistant polymethylmethacrylate sheet 4 is rested on the base 23 of the mould 1, and vacuum is applied through the ducts 11. This vacuum must have an absolute value exceeding 350 mmHg.
The polyurethane mixture mixed with an inert charge of hollow glass microspheres is poured into the mould compartment 5. The reactive components of this mixture are polyols and isocyanates in a weight ratio of 1:0.95. The polyol contains the necessary catalysts, such as tertiary amines in a quantity of 1% by weight. The microsphere charge is equal to 30% by weight of the polyol.
Expanding agents may be added. The impact resistant polymethylmethacrylate sheet 3 is applied to the cover 15 (while this is separated from the mould 1), and is kept adhering by the vacuum applied through the duct 18. This vacuum is of the aforesaid value.
The cover 15 is then applied to the mould 1 by the cylinder-piston unit 17.
The mould (complete with cover) is heated to a temperature of between 40 and 70°C by feeding hot water through the ducts 6 and through the ducts 101A1 of the cover. The water temperature is controlled thermostatically. Silicone oil or other non-stick material is previously applied to the side walls of the mould to prevent the polyurethane adhering to them. The vacuum is maintained continuously on the sheets 3 and 4 until the termination of the reaction, i.e. until the polyurethane is completely hardened.
When the reaction has terminated, the mould is cooled by a circulating cold water through the ducts 6. After cooling, the vacuum is removed from the ducts 11, but is retained in the ducts 18. The cover 15 is then raised and takes with it the panel obtained due to the presence of vacuum in the ducts 18. The vacuum is removed, and the panel separates from the cover 15.
Figures 2 and 3 show a device for producing the toilet seat shown in Figures 4 and 5. The reference numeral 1A indicates overall a mould. It comprises a forming cavity 2A, the shape of which cor responds to that of the object to be obtained, which in the illustrated example is the seat 3A of a toilet bowl 4A, as already stated. The cross-section through this seat is shown in Figure 5.

The mould 1A is provided internally with ducts 5A connected to an external discharge 6A and connectable by way of a valve 7A either to a source 8A of hot water at a thermostatically controlled temperature or to a source 9A of water at mains temperature.

In the wall which bounds the forming cavity 2A there are a plurality of holes, each of which represents the end of a duct 10A. All these ducts, which are provided in the interior of the mould, terminate in a manifold 11A connected to a vacuum source 12A by way of a valve 13A.

An impact resistant polymethylmethacrylate (PMMA) sheet 14A, for example having a thickness of 1 mm, is rested on the upper face of the mould 1A.

This sheet is of a size such that its edge extends beyond the outer edge of the forming cavity 2A.

A removable heating device 15A consisting of a box member 16A holding electrical resistance elements 17A and a reflector 18A is then superposed on the sheet 14A. These resistance elements are controlled by a thermostat 19A disposed in the mould 1A in contact with the sheet 14A. After this, hot water is fed through the ducts 5A and the resistance elements 17A are fed with electricity.

The sheet 14A thus becomes heated. When the set temperature of the thermostat 19A is reached, the resistance elements 17A are disconnected the valve 13A is opened, and the sheet 14A, which has become plastic due to the heat, adheres against the walls of the cavity 2A by the action of the vacuum, to assume the configuration shown in Figure 3.

The heating device 15A is removed, and a second impact resistant polymethylmethacrylate (PMMA) sheet 20A provided with holes 21A coinciding with the forming cavities 2A defined by the now shaped first sheet is placed on the mould.

A metal presser plate 24A is applied to the top of the sheet 20A by a double-acting cylinder-piston unit 22A. The presser plate 24A, which is also heatable by circulating thermostatically controlled hot water, comprises channels, not visible, which can be connected to a vacuum source in a manner analogous to the cover 15 of Figure 1.

The plate comprises holes 23A aligned with the holes 21A of the sheet 20A. While maintaining vacuum on the two sheets 14A and 20A, the polyurethane mixture 25A is fed into the cavity 2A through said aligned holes.

This feed can be effected either by a conventional polyurethane mixing heater, not shown, or, as shown in Figure 3, by using a container A in which the reactive components for forming the polyurethane together with an inert charge of hollow glass microspheres have been placed and mixed.

The mould (together with the presser plate 24A) is kept hot at a temperature of between 40 and 70°C by circulating hot water. The application of vacuum to the sheets 14A and 20A is continued. The mould is then cooled by switching the valve 7A to cold water circulation.

After cooling, vacuum is removed from the ducts 10A but not from the ducts of the plate 24A, this latter is raised and the structure obtained is removed from the mould, after which vacuum is removed from the plate 24A and the structure is separated from this latter.

The structure comprises a peripheral flange and a central full zone (this zone is indicated by B in Figure 3). These parts, which are superfluous, are removed either by separating them manually or by placing the structure in a shearing machine comprising cutting tools shaped to follow the seat outline.

Preferably, the method of the invention is implemented in the manner described hereinafter. Although the description given hereinafter relates by way of example to the production of a structure in the form of an ellipsoid of rotation, it will be apparent to an expert of the art that it can be applied analogously to the production of other objects, such as toilet lids, for which a detailed description is given hereinafter.

Two half-shells 101, 102 are obtained from impact resistant polymetylmethacrylate sheets of 1.2 mm thickness by vacuum-forming. The mould for this purpose can be conventional or analogous to that of Figure 3, but obviously with a different forming cavity. The two identical half-shells have a flat peripheral flange 101A, 102A. One of the half-shells has an opening 103 for feeding the polyurethane mixture of the described type. The two half-shells are extracted from the mould, and one of them, as shown in Figure 6, is placed on an annular positioning member 104 with a cutting edge 105 which follows the outline of the half-shell.

The other half-shell is then superposed on the preceding, and the periphery is then welded ultrasonically and trimmed (i.e. the edges 101A, 102 are removed in line with the half-shells).

In addition to the ring 104, the welding and trimming apparatus comprises a sonic applicator 109 having a cavity 110 for holding the half-shell 101. The sonic applicator is connected to the oscillator 108. The sonic applicator and oscillator are connected to the rod 106 of a double-acting cylinder-piston unit 107.

The sonic applicator 109 is lowered onto the half-shell 101 and energised. When welding is complete, the excess edges 101A, 102A are completely removed by the effect of the thrust exerted by the cylinder-piston unit 107 and the presence of the cutter 105, to obtain a hollow ellipsoidal structure. This hollow structure is placed in a mould of corresponding shape formed from two mutually mobile parts, each of which comprises ducts for the cooling and heating fluid (analogous to the ducts 6, 101A1 of Figures 1 and 3) and vacuum ducts (analogous to the ducts 10A, 11, 12, 18, 21 of said Figures 1 and 3). The mould is closed and vacuum is applied, the polyurethane mixture then being fed through the opening 103. The vacuum (550 mmHg) is maintained during cooling, after which the mould is opened to release the structure obtained.

With this embodiment, the toilet seat is produced as follows: The shell 14A (see Figure 3) is conventionally obtained by vacuum-forming starting from a polymethylmethacrylate sheet having a thickness for example of 1.2 mm. The shell is removed from the mould and placed on a positioner with cutting edges conceptually equivalent to that heretofore described, but of the correct shape for this purpose. A flat sheet such as that indicated by 20A in Figure 3 and comprising holes such as the holes 21A is then superposed. Ultrasonic welding is then effected, followed by trimming of the excess material as described in relation to Figure 6.

The hollow structure is then inserted into a mould corresponding to that of Figure 3. A vacuum of 550 mmHg is applied, the temperature is controlled at 50°C and the polyurethane mixture is fed in. After cooling, the vacuum is released and the toilet seat removed.

The use of other weldind systems such as hot blade, high frequency, laser and vibration systems instead of ultrasonics also falls within the scope of the invention.

The following examples illustrate the products used for producing the structures according to the invention.

EXAMPLE 1

To produce a pencil holder, two commercially available impact resistant polymethylmethacrylate (PMMA) sheets were used, for example Oroglas DR, a trademark of Rohm and Haas, having a thickness of 0.7 mm and coloured yellow throughout. One of these sheets was hot vacuum-formed in a mould of the required shape in a manner analogous to that described heretofore, whereas the other sheet was used flat and provided with holes for receiving the component mixture for forming the polyurethane filling.

In this mixture, the polyol/isocyanate ratio was 1:0.97.

The carbonate filler ws 20% by weight of the polyol. The polyol was marketed under the name of AF 515 by POZZI-AROSIO di A. Pozzi & C. S.a.s. Industria Vernici Speciali.

The isocyanate was marketed by the same company under the name "Indurente AF 515".

In this example, the vacuum again remained applied to the sheets during the polyurethane reaction and until its hardening. The mould heating temperature was between 50 and 55°C.

EXAMPLE 2

A shaped structure was required comprising a Ω-shaped shell with a polyurethane interior.

An impact resistant polymethylmethacrylate (PMMA) sheet of 0.6 mm thickness was hot vacuum-formed. A mixture composed of polyol and isocyanate in a weight ratio of 1:1 and with an inerts content equivalent to 25% by weight of the polyol was poured into the opening of the Ω.

A second sheet of impact resistant polymethylmethacrylate (PMMA) was therefore not used in this example.

Again in this case, the operation took place under vacuum and at temperature as indicated heretofore.

As already stated, the polymethylmethacrylate sheets can be vacuum-formed in a separate mould. The vacuum-formed sheet or sheets would then be transferred to a mould in which the polyurethane filling is inserted, while applying vacuum to the sheet or sheets.

**Claims**

1. A method for producing composite structures comprising at least one layer of polymethylmethacrylate and at least one layer of polyurethane, in which the polyurethane formation reaction takes place in contact with the polymethylmethacrylate, characterized in that the polymethylmethacrylate used is of impact resistant type, the polyurethane is of rigid compact or semiexpanded type, and the composite structure is formed by heating the polymethylmethacrylate layer to between 40 and 70°C and applying a vacuum to it.

2. A method as claimed in claim 1, characterized in that the polymethylmethacrylate has a thickness not exceeding 1.2 mm.

3. A method as claimed in claims 1 and 2, characterized in that the impact resistant polymethylmethacrylate layer is previously shaped by vacuum-forming.

4. A method as claimed in claim 3, characterized in that the vacuum-forming and the rigid polyurethane formation reaction take place in the same mould.

5. A method as claimed in claim 3, characterized in that the vacuum-forming is implemented in one mould and the filling with the polyurethane mixture in another.

6. A method as claimed in one or more of the preceding claims, characterized in that the impact resistant polymethylmethacrylate layer at least partially surrounds the rigid polyurethane.

7. A method as claimed in at least one of the preceding claims, characterized in that the mixture comprises polyol, isocyanate and a catalyst, and possibly inserts and expanding agents, the polyol being a mixture of polyol having several hydroxyl groups per molecule and a mean molecular weight of about 1300, and deriving from the reaction of alcohols, such as sorbitol, saccharose, glycerin and the like, with

alkylene oxides of ethylene and propylene type, the isocyanate being formed from a mixture of diphenylmethane-4,4'-diisocyanate and polymers thereof, the catalyst being at least one component of the group consisting of stannous compounds (stannous octoate), tertiary amines and their mixtures.

8. A method as claimed in at least one of the preceding claims, characterized in that the polyol/isocyanate weight ratio in the mixture lies between 1:0.95 and 1:1.05.

9. A method as claimed in at least one of the preceding claims, characterized in that the inerts are present in the mixture to the extent of 5-60 parts by weight per 100 parts of polyol.

10. A method as claimed in claim 1, characterized in that the applied vacuum exceeds 350 mmHg.

11. A method as claimed in at least one of the preceding claims, characterized in that in order to produce structures in which the impact resistant polymethylmethacrylate layer defines at least one cavity in which the rigid polyurethane is contanied and the impact resistant polymethylmethacrylate layer is obtained from at least two sheets at least one of which is vacuum-formed, after the sheet or sheets have been formed the sheets are joined together by welding and the excess parts are removed.

12. A composite structure characterized by comprising at least one layer of impact resistant polymethylmethacrylate (PMMA) of thickness which does not exceed 1.2 mm, and a least one layer of rigid compact or semiexpanded polyurethane, these layers being irreversibly joined together.

**Patentansprüche**

1. Verfahren zur Herstellung eines Verbundkörpers bestehend aus wenigstens einer Schicht aus Polymethylmethacrylat und wenigstens einer Schicht aus Polyurethan, wobei die Polyurethan-Bildungsreaktion in Berührung mit dem Polymethylmethacrylat stattfindet, dadurch gekennzeichnet, daß das eingesetzte Polymethylmethacrylat eine schlagfeste Art ist, das Polyurethan eine steife, kompakte oder halbgeschäumte Art ist und daß der Verbundkörper durch Erhitzen der Polymethylmethacrylatschicht auf 40 bis 70°C unter Anwendung von Vakuum gebildet wird.

2. Verfahren nach Anspruch 1, dadurch gekennzeichnet, daß das Polymethylmethacrylat eine Dicke von nicht mehr als 1,2 mm hat.

3. Verfahren nach den Ansprüchen 1 und 2, dadurch gekennzeichnet, daß die schlagfeste Polymethylmethacrylatschicht vorher durch Vakuumformung geformt wird.

4. Verfahren nach Anspruch 3, dadurch gekennzeichnet, daß die Vakuumformung und die Bildungsreaktion des steifen Polyurethans in ein und derselben Form stattfinden.

5. Verfahren nach Anspruch 3, dadurch gekennzeichnet, daß die Vakuumformgebung in einer Form und die Füllung mit dem Polyurethangemisch in einer anderen Form durchgeführt wird.

6. Verfahren nach einem oder mehreren der vorhergehenden Ansprüche, dadurch gekennzeichnet, daß die Schicht aus schlagfestem Polymethylmethacrylat wenigstens teilweise das steife Polyurethan umgibt.

7. Verfahren nach wenigstens einem der vorhergehenden Ansprüche, dadurch gekennzeichnet, daß das Gemisch aus Polyol, Isocyanat und einem Katalysator und gegebenenfalls inerten Stoffen und Schäummitteln besteht, das Polyol ein Gemisch aus Polyol mit mehreren Hydroxylgruppen pro Molekül und einem mittleren Molekulargewicht von etwa 1300 ist und aus der Reaktion von Alkoholen, wie Sorbitol, Saccharose, Glycerin u.dgl. mit Alkylenoxiden von der Art Äthylen und Propylen abgeleitet ist, das Isocynat aus einem Gemisch von Diphenylmethan-4.4'-diisocyanat und Polymeren hiervon gebildet ist, und der Katalysator wenigstens eine Komponente der Gruppe umfassend Zinn(II)-verbindungen (Zinn(II)-octoat), tertiäre Amine und deren Gemische, ist.

8. Verfahren nach wenigstens einem der vorhergehenden Ansprüche, dadurch gekennzeichnet, daß das Gewichtsverhältnis Polyol/Isocyanat im Gemisch zwischen 1:0,95 und 1:1,05 liegt.

9. Verfahren nach wenigstens einem der vorhergehenden Ansprüche, dadurch gekennzeichnet, daß die inerten Stoffe im Gemisch bis zu einem Ausmaß von 5–60 Gew.-Teilen pro 100 Gew.-Teile Polyol zugegen sind.

10. Verfahren nach Anspruch 1, dadurch gekennzeichnet, daß das angewendete Vakuum größer als 350 mm Hg ist.

11. Verfahren nach wenigstens einem der vorhergehenden Ansprüche, dadurch gekennzeichnet, daß, um Körper herzustellen, in denen die Schicht aus schlagfestem Polymethylmethacrylat wenigstens einen Hohlraum definiert, in dem das steife Polyurethan enthalten ist, und die Schicht aus schlagfestem Polymethylmethacrylat aus wenigstens zwei Tafeln erhalten wird, von denen wenigstens eine vakuumgeformt ist, nach dem Formen der Tafel oder Tafeln die Tafeln durch Verschweißen miteinander verbunden und die überschüssigen Teile entfernt werden.

12. Verbundkörper, dadurch gekennzeichnet, daß er aus wenigstens einer Schicht eines schlagfesten Polymethylmethacrylats (PMMA) von einer Dicke, die 1,2 mm nicht überschreitet, und wenigstens einer Schicht eines steifen, kompakten oder halbgeschäumten Polyurethans besteht, wobei diese Schichten irreversibel miteinander verbunden sind.

## Revendications

1. Procédé pour la fabrication de structures composites comprenant au moins une couche de polyméthylméthacrylate et au moins une couche de polyuréthane, dans lequel la réaction de formation du polyuréthane s'effectue en contact avec le polyméthylméthacrylate, caractérisé en ce que le polyméthylméthacrylate utilisé est de type résistant au choc, le polyuréthane est de type compact rigide ou semi-expansé, et la structure composite est formée par chauffage de la couche de polylméthylméthacrylate à une température comprise entre 40 et 70°C et application d'un vide à cette couche.

2. Procédé suivant la revendication 1, caractérisé en ce que l'épaisseur du polyméthylméthacrylate ne dépasse pas 1, 2 mm.

3. Procédé suivant les revendications 1 et 2, caractérisé en ce que la couche de polyméthylméthacrylate résistant au choc est préalablement mise en forme par formage sous vide.

4. Procédé suivant la revendication 3, caractérisé en ce que le formage sous vide et la réaction de formation du polyuréthane rigide ont lieu dans le même moule.

5. Procédé suivant la revendication 3, caractérisé en ce que le formage sous vide est réalisé dans un moule et le remplissage avec le mélange de polyuréthane dans un autre moule.

6. Procédé suivant une ou plusieurs des revendications précédentes, caractérisé en ce que la couche de polyméthylméthacrylate résistant au choc entoure au moins partiellement le polyuréthane rigide.

7. Procédé suivant au moins une des revendications précédentes, caractérisé en ce que le mélange comprend un polyol, un isocyanate et un catalyseur, et éventuellement des matières inertes et des agents d'expansion, le polyol étant un mélange de polyols possédant plusieurs groupes hydroxyle par molécule et un poids moléculaire moyen de 1300 environ, et provenant de la réaction d'alcools, tels que sorbitol, saccharose, glycérine et analogue, avec desoxydes d'alkylène du type éthylène et propylène, l'isocyanate étant obtenu à partir d'un mélange de diphénylméthane-4,4'-diisocyanate et de ses polymères, le catalyseur étant au moins un composant du groupe constitué de composés stanneux (octoate stanneux), d'amines tertiaires et de leurs mélanges.

8. Procédé suivant l'une au moins des revendications précédentes, caractérisé en ce que le rapport pondéral polyol/isocyanate dans le mélange est compris entre 1:0,95 et 1:0,05.

9. Procédé suivant l'une au moins des revendications précédentes, caractérisé en ce que les matières inertes sont présentes dans le mélange à raison de 5 à 60 parties en poids pour 100 parties de polyol.

10. Procédé suivant la revendication 1, caractérisé en ce que le vide appliqué dépasse 350 mm Hg.

11. Procédé suivant l'une au moins des revendications précédentes, caractérisé en ce que, afin de produire des structures dans lesquelles la couche de polyméthylméthacrylate résistant au choc définit au moins une cavité dans laquelle le polyuréthane rigide est contenu et la couche de polyméthylméthacrylate résistant au choc est obtenue à partir d'au moins deux feuilles dont l'une au moins est formée sous vide, après formage de la feuille ou des feuilles, les feuilles sont reliées l'une à l'autre par soudage et les parties en excès sont enlevées.

12. Structure composite, caractérisée en ce qu'elle comprend au moins une couche de polyméthylméthacrylate résistant au choc (PMMA) d'une épaisseur qui ne dépasse pas 1,2 mm, et au moins une couche de polyuréthane compact rigide ou semi-expansé, ces couches étant reliées les unes aux autres de façon irréversible.

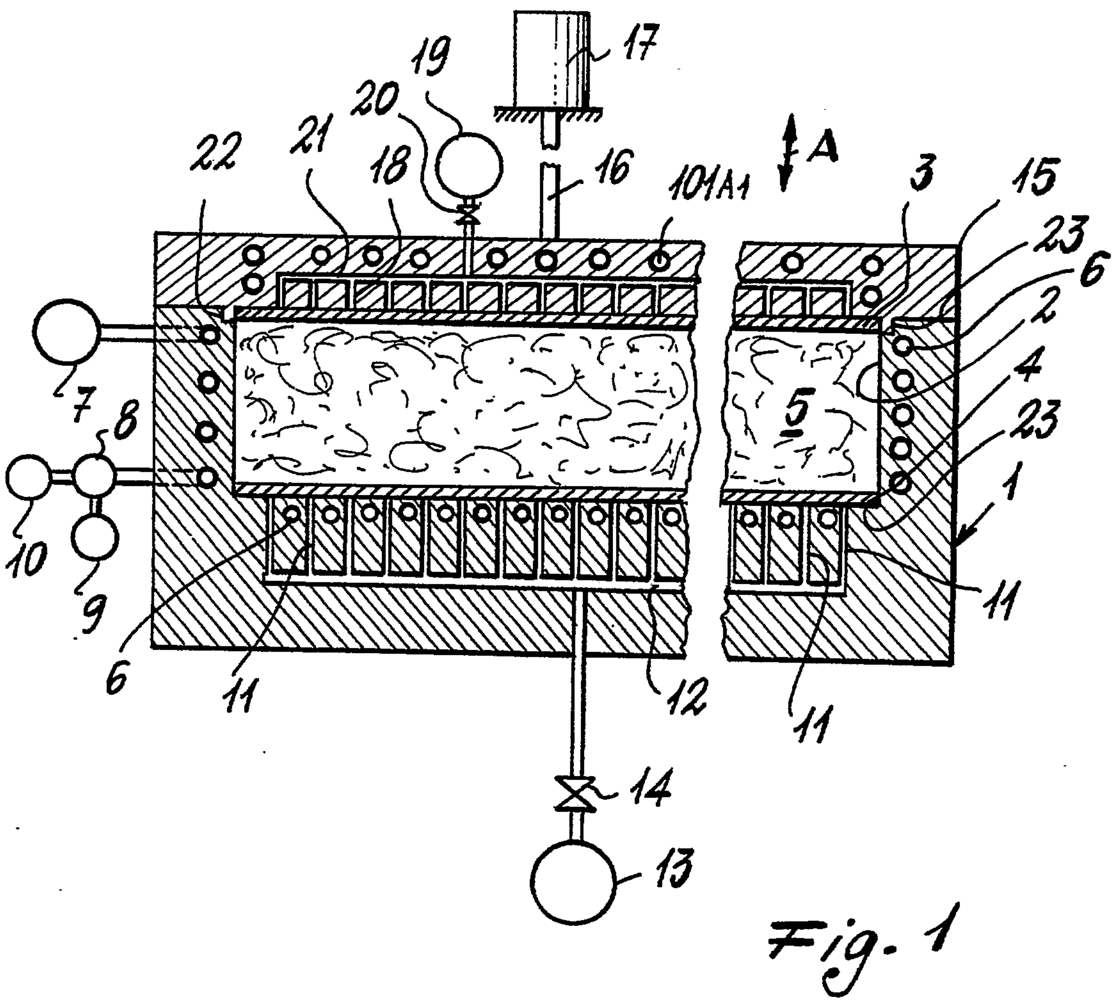
17
19
20
A
22
21
18
16
101A1
3
15
23
6
2
4
23
1
5
7
8
10
9
6
11
12
11
11
14
13

Fig. 1

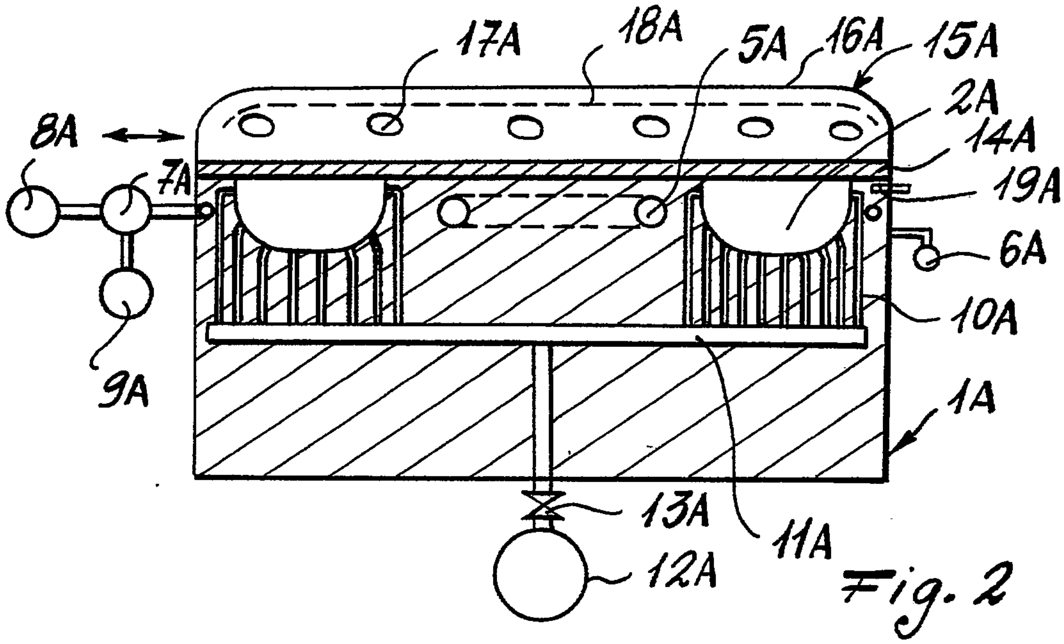
17A
18A
5A
16A
15A
2A
14A
8A
7A
19A
6A
10A
9A
1A
13A
11A
12A

Fig. 2

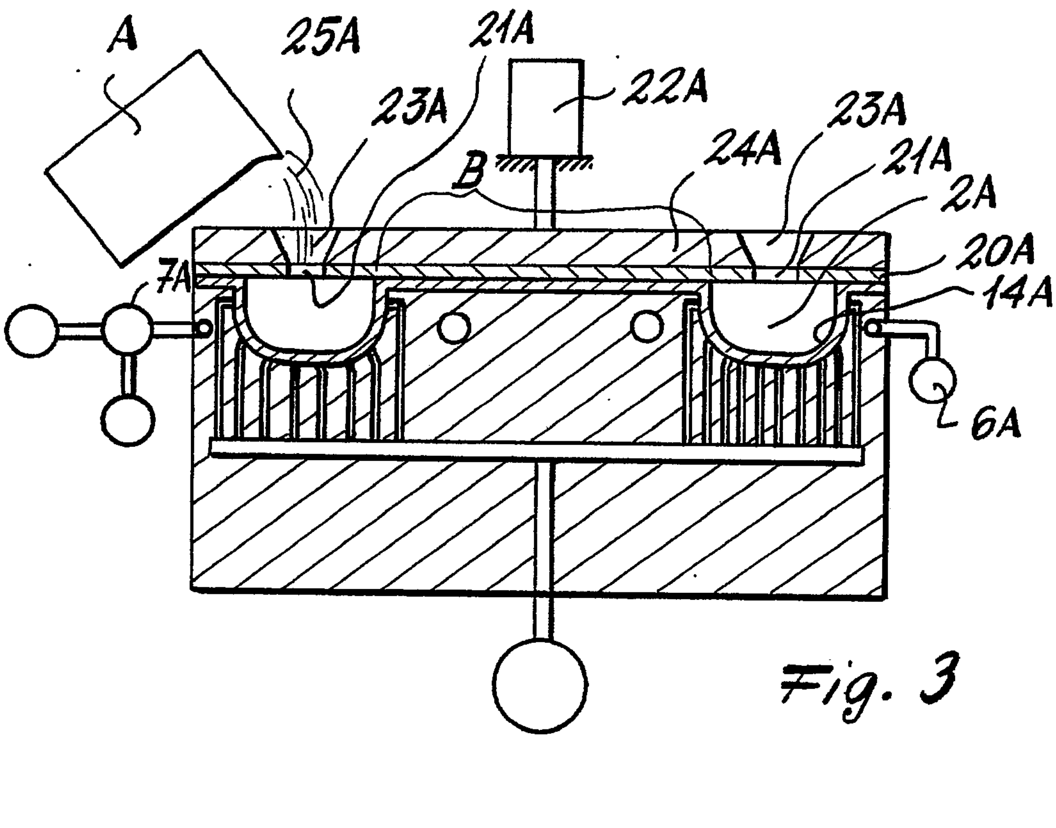
A
25A
21A
23A
22A
24A
23A
21A
B
2A
20A
7A
14A
6A

Fig. 3

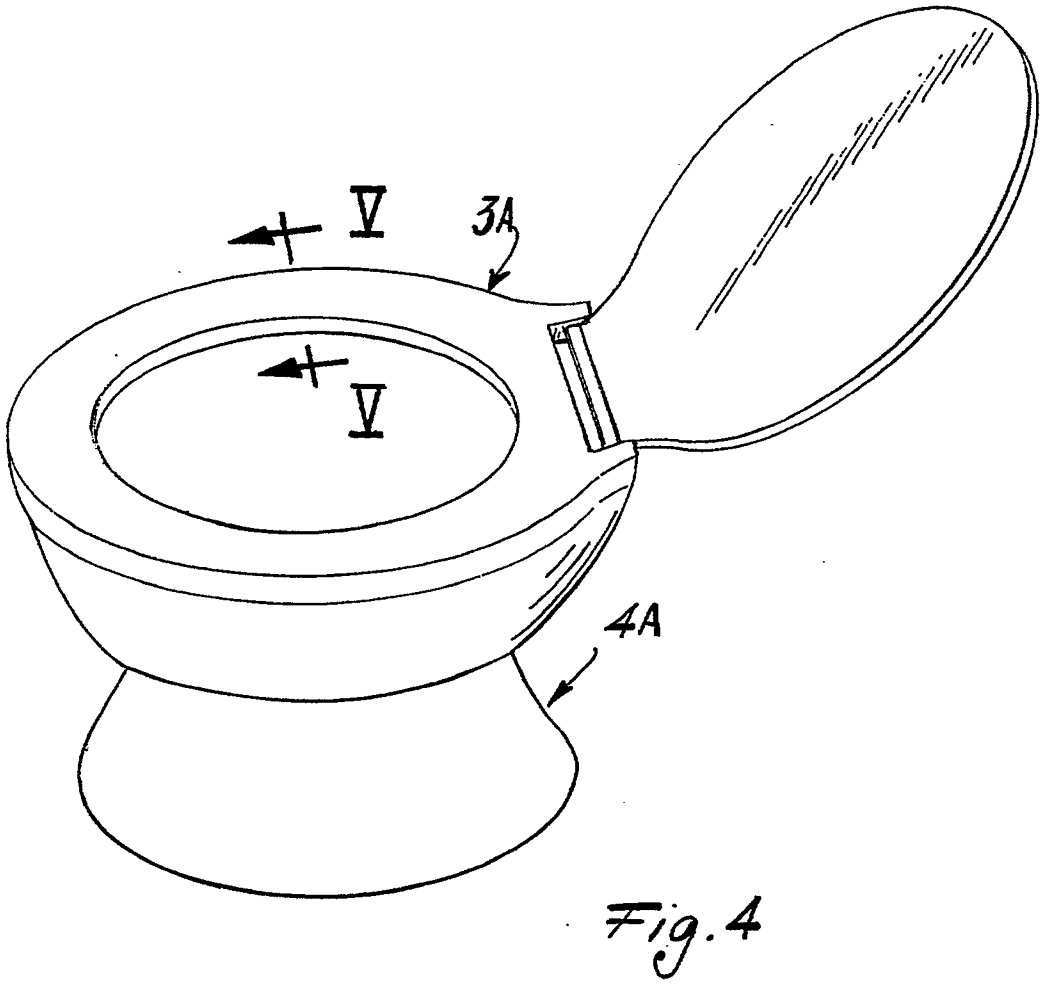


Fig.4

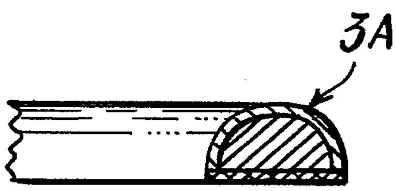


Fig.5

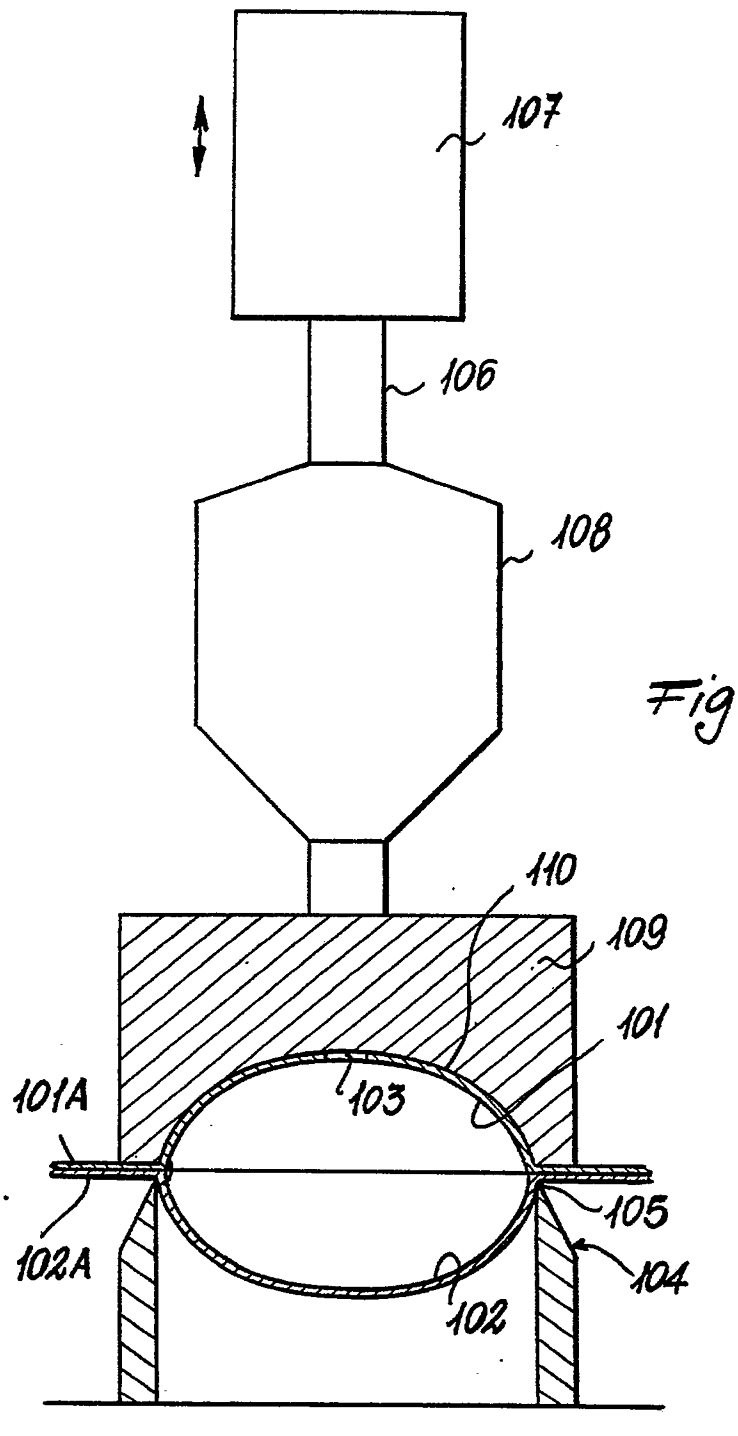


Fig. 6